# EUROPÄISCHE PATENTSCHRIFT

(11) **EP 3 466 238 B1**
(45) Veröffentlichungstag und Bekanntmachung des Hinweises auf die Patenterteilung: **04.05.2022**
(21) Anmeldenummer: 18185637.8
(22) Anmeldetag: 26.07.2018
(51) Int. Cl.: A01D 41/127

(54) **LANDWIRTSCHAFTLICHE ERNTEMASCHINE**
AGRICULTURAL HARVESTER
MOISSONNEUSE

(30) Priorität: 28.09.2017 DE 102017122576
(43) Veröffentlichungstag der Anmeldung: 10.04.2019
(73) Patentinhaber: CLAAS Selbstfahrende Erntemaschinen GmbH, 33428 Harsewinkel (DE)
(72) Erfinder: Berger, Arthur, 49143 Bissendorf (DE); Dieckmeyer, Sascha, 49326 Melle (DE); Terörde, Stefan, 48231 Warendorf (DE); Vöcking, Henner, 33397 Rietberg (DE); Neu, Sebastian, 49196 Bad Laer (DE); Rempel, Viktor, 33428 Harsewinkel (DE); Bussmann, Christoph, 33428 Harsewinkel (DE)
(74) Vertreter: CLAAS Gruppe

(56) Entgegenhaltungen:
- EP-A1- 2 826 356
- EP-A1- 2 853 144
- EP-A2- 2 698 700
- EP-B1- 2 826 356

## Beschreibung

Die vorliegende Erfindung betrifft eine landwirtschaftliche Erntemaschine gemäß dem Oberbegriff von Anspruch 1.

Landwirtschaftliche Erntemaschinen und insbesondere selbstfahrende Erntemaschinen, zu denen etwa Mähdrescher und Feldhäcksler zählen, nehmen Erntegut vom Feld auf und bearbeiten es mit einer Reihe von Arbeitsaggregaten, um etwa einen möglichst großen Kornertrag in den Korntank der Erntemaschine abschöpfen zu können. Diese Arbeitsaggregate sind steuerbar, wobei insbesondere ihre Betriebsparameter eingestellt werden können und wobei je nach Einstellung dieser Parameter und den herrschenden Randbedingungen eine höhere oder niedrigere Qualität des geernteten Ernteguts die Folge ist. Zur Steuerung der Arbeitsaggregate und zur Einstellung ihrer Parameter weisen moderne Erntemaschinen regelmäßig Steuer- und Regeleinrichtungen auf, welche wiederum vom Fahrer von seiner Kabine aus bedient werden können. Bei Mähdreschern zählt zu diesen Arbeitsaggregaten etwa das Dreschwerk, welches regelmäßig einen Dreschkorb und eine Mehrzahl von Dreschorganen aufweist, sowie eine dem Dreschwerk nachgeschaltete Trenneinrichtung mit beispielsweise einem Schüttler und eine Reinigungseinrichtung mit beispielsweise einem Gebläse und mehreren Sieben.

Je nach dem, was für ein Erntegut, z.B. Raps, Weizen oder Gerste, geerntet werden soll und welche Randbedingungen auf dem Erntefeld und seiner Umgebung herrschen, ist eine unterschiedliche Steuerung und Parametereinstellung der Arbeitsaggregate erforderlich, um eine möglichst hohe Qualität im Erntegut und gleichzeitig einen möglichst hohen Durchsatz zu erreichen. Unerwünscht sind insbesondere hohe Anteile von gebrochenen Körnern, den sogenannten Bruchkörnern, sowie von Verunreinigungen, den sogenannten Nichtkornbestandteilen, im Erntegut.

Die bekannte landwirtschaftliche Erntemaschine (EP 2 826 356 B1), von der die Erfindung ausgeht, weist als Bestandteil einer Kontrollanordnung eine Kamera auf, die Bildserien des Erntegutstroms im Ernteguttransportweg aufnimmt, die dann hinsichtlich der Qualität des abgebildeten Ernteguts, welche Qualität sich in erster Linie an dem Anteil an Bruchkörnern (Bruchkornanteil) und dem Anteil an Nichtkornbestandteilen (Nichtkornanteil) bemisst, analysiert werden. Basierend auf der Analyse der Qualität können dann automatisch oder bedienerseitig Betriebsparameter der Arbeitsaggregate geändert werden, um beispielsweise den Bruchkornanteil und/oder Nichtkornanteil zu verringern. Die Besagte Kamera, auch Grain Quality Camera (Kornqualitätskamera) genannt, ist beispielsweise am Kornelevator, insbesondere an dessen oberem Ende, angeordnet, welcher das Korn von der Reinigungsvorrichtung in den Korntank der Erntemaschine transportiert.

Um eine möglichst optimale Analyse des Erntegutstroms basierend auf der von der Kamera aufgenommenen Bildserie zu erreichen, ist es erforderlich, die Empfindlichkeit der Kamera optimal an das vorbeiströmende Erntegut anzupassen. Zum Einstellen der Kamera hat der Bediener die Möglichkeit, sich durch die Kontrollanordnung zum einen eine Aufnahme, beispielsweise ein Standbild, des durchlaufenden Erntegutstroms und zum anderen die durch die Kontrollanordnung ermittelten Erntegutparameter "Bruchkornanteil" und/oder "Nichtkornanteil" anzeigen zu lassen. Der Bediener kann dann das von der Auswerteeinrichtung der Kontrollanordnung ermittelte Ergebnis der Erntegutparameter mit dem tatsächlichen Bild des Erntegutstroms vergleichen und bei Abweichungen die Kameraempfindlichkeit entsprechend anpassen.

Die Einstellung von Kameraparametern, zu denen hier insbesondere die Kameraempfindlichkeit zählt, erfolgt beispielsweise über eine Visualisierungseinrichtung mit einem Monitor, wie sie im Grundsatz in der DE 10 2012 107 550 A1 beschrieben ist. Die von der Auswerteeinrichtung der Kontrollanordnung ermittelten Erntegutparameter "Bruchkornanteil" und/oder "Nichtkornanteil" werden dabei auf einem separaten Monitor angezeigt. Die DE 10 2013 107 766 A1 beschreibt einen Landmaschinensimulator, in welchem die beiden separaten Monitore, nämlich der zum Vornehmen der Einstellung der Kameraparameter vorgesehene Monitor und der zum Anzeigen der ermittelten Erntegutparameter vorgesehene Monitor, simuliert werden.

Nachteilig bei der zuvor beschriebenen Methode zum Einstellen besagter Kamera ist, dass die Einstellung bzw. Änderung der Kameraparameter der zuvor beschriebenen Kamera einerseits und das Ergebnis der von der Auswerteeinrichtung vorgenommenen Bildanalyse (Bruchkornanteil, Nichtkornanteil) andererseits auf verschiedenen Monitoren bzw. in verschiedenen Menüs visualisiert werden. Eine effiziente Einstellung einer Kamera zur Aufnahme einer Bildserie eines durchlaufenden Erntegutstroms zum Zwecke der Ermittlung der Erntegutparameter "Bruchkornanteil" und "Nichtkornanteil" ist auf diese Weise nicht möglich.

Der vorliegenden Erfindung liegt das Problem zugrunde, die bekannte landwirtschaftliche Erntemaschine derart auszugestalten und weiterzubilden, dass eine verbesserte Einstellbarkeit einer Kamera zur Aufnahme einer Bildserie eines durchlaufenden Erntegutstroms gewährleistet wird.

Das genannte Problem wird bei einer landwirtschaftlichen Erntemaschine mit den Merkmalen des Oberbegriffs von Anspruch 1 durch die Merkmale des kennzeichnenden Teils von Anspruch 1 gelöst.

Wesentlich ist die Erkenntnis, dass durch eine gleichzeitige Anzeige des realen Bilds des Erntegutstroms, beispielsweise in Form eines Standbilds, der real ermittelten Erntegutparameter "Bruchkornanteil" und/oder "Nichtkornanteil" (Reinheitsgrad) und eines Moduls, über das sich Einstellungen von Kameraparametern vornehmen lassen, der Bediener im einfachsten Fall subjektiv beurteilen kann, ob der Anteil an Bruchkorn und/oder der Anteil an Nichtkornbestandteilen bzw. die Reinheit des Korns mit den systemseitig ermittelten und angezeigten Werten für den Bruchkornanteil und/oder Nichtkornanteil übereinstimmt. "Real ermittelt" meint, dass die Erntegutparameter aus dem während der Aufnahme des Bilds des Erntegutstroms real an der Kamera vorbeiströmenden Erntegut ermittelt wurden. Besteht nun eine Abweichung, d.h., stellt der Bediener fest, dass im realen Bild des Erntegutstroms ein anderer Bruchkornanteil und/oder Nichtkornanteil zu erkennen ist, als das System ermittelt hat, kann der Bediener mindestens einen Kameraparameter der Kamera, insbesondere die Kameraempfindlichkeit, entsprechend nachregeln und unmittelbar, d.h. in Echtzeit, das Ergebnis der von ihm vorgenommenen Änderung überprüfen.

Im Einzelnen ist zu diesem Zweck bei der vorschlagsgemäßen landwirtschaftlichen Erntemaschine vorgesehen, dass der/die Kameraparameter in der Weise änderbar ist/sind, dass die Visualisierungseinrichtung das reale Bild des Erntegutstroms, den/die real ermittelten Erntegutparameter "Bruchkornanteil" und/oder "Nichtkornanteil" und ein Kameraparameter-Änderungsmodul der Kameraeinstelleinrichtung in der Weise zugleich anzeigt, dass eine Änderung des/der Kameraparameter(s) an einen Echtzeit-Vergleich des/der von der Auswerteeinrichtung ermittelten Erntegutparameter(s) "Bruchkornanteil" und/oder "Nichtkornanteil" mit den im realen Bild dargestellten realen Bedingungen koppelbar ist.

Nach der Ausgestaltung gemäß Anspruch 2 erfolgt die gleichzeitige Anzeige des realen Bilds, der darauf basierend ermittelten Erntegutparameter und des Kameraparameter-Änderungsmoduls auf einem gemeinsamen Monitor.

Bevorzugte Ausgestaltungen des Monitors der Visualisierungseinrichtung sowie Aufteilungen und Darstellungsmöglichkeiten des Monitors sind in den Ansprüchen 3 bis 7 definiert.

Die Ansprüche 8 bis 10 definieren besonders bevorzugte Ausgestaltungen des Kameraparameter-Änderungsmoduls der Kameraeinstelleinrichtung. Hierbei handelt es sich insbesondere um ein virtuelles Änderungsmodul, also ein Änderungsmodul mit mindestens einem virtuellen Bedienelement.

In den Ansprüchen 11 und 12 sind schließlich bevorzugte Kameraparameter beschrieben, die bedienerseitig jeweils über die Kameraeinstelleinrichtung änderbar sind, wenn der Bediener eine Abweichung zwischen dem systemseitig ermittelten Bruchkornanteil und/oder Nichtkornanteil und dem anhand des realen Bildes selbst ermittelten Bruchkornanteil und/oder Nichtkornanteil feststellt.

Im Folgenden wird die Erfindung anhand einer lediglich ein Ausführungsbeispiel darstellenden Zeichnung näher erläutert. In der Zeichnung zeigt
- Fig. 1: eine vorschlagsgemäße landwirtschaftliche Erntemaschine in einer ganz schematischen Darstellung und
- Fig. 2: eine Visualisierungseinrichtung einer Kontrollanordnung der landwirtschaftlichen Erntemaschine gemäß Fig. 1.

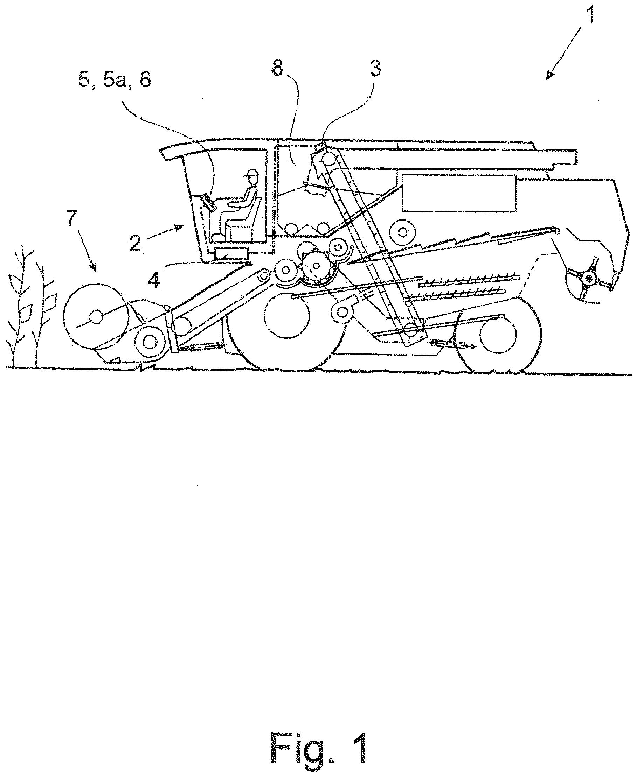

Die in der Fig. 1 dargestellte landwirtschaftliche Erntemaschine 1, bei der es sich hier beispielhaft um einen Mähdrescher 1 handelt, weist eine Kontrollanordnung 2 auf. Diese Kontrollanordnung 2 umfasst eine Kamera 3 zur Aufnahme von Bildserien eines durchlaufenden Erntegutstroms, hier und vorzugsweise eine Grain Quality Camera, sowie eine Auswerteeinrichtung 4 zur Ermittlung eines Bruchkornanteils und/oder eines Nichtkornanteils des Erntegutstroms basierend auf der Analyse einer aufgenommenen Bildserie.

Die Kontrollanordnung 2 weist ferner eine Visualisierungseinrichtung 5 zur Anzeige des Erntegutparameters "Bruchkornanteil" BKA und/oder des Erntegutparameters "Nichtkornanteil" NKA bzw. des jeweiligen Parameterwertes auf. Schließlich weist die Kontrolleinrichtung 2 eine Kameraeinstelleinrichtung 6 zur bedienerseitigen Änderung eines oder mehrerer Kameraparameter bzw. entsprechender Parameterwerte der Kamera 3 auf.

Hierbei können insbesondere die Auswerteeinrichtung 4 und/oder die Visualisierungseinrichtung 5 und/oder die Kameraeinstelleinrichtung 6 sowohl separat als auch als ein gemeinsames Gerät ausgeführt sein.

Eine Bildserie in diesem Sinne besteht aus einer beliebigen Reihe von in kurzem Abstand hintereinander aufgenommenen Einzelbildern, wobei eine solche Bildserie auch nur aus einem einzelnen Bild bestehen kann. In besonders bevorzugter Ausgestaltung besteht jede Bildserie aus einer konstanten Anzahl von Bildern.

Es können ein oder mehrere Bilder aus der Bildserie zur weiteren Auswertung durch die Auswerteeinrichtung 4 ausgewählt werden, wobei die restlichen Bilder auch verworfen werden können. Der zeitliche Abstand zwischen den einzelnen Bildern einer Bildserie kann als Zwischenbildzeit definiert werden, wobei dann die gesamte Aufnahmedauer der Bildserie als Bildserienaufnahmedauer bezeichnet werden kann. Die Zwischenbildzeit kann sowohl konstant als auch, was bevorzugt ist, variabel und insbesondere durch die Auswerteeinrichtung 4 einstellbar sein. Es kann auch eine Videoaufnahme stattfinden, aus welcher dann ein oder mehrere einzelne Standbilder ausgewählt werden, welche damit eine Bildserie bilden. Die Zwischenbildzeit ergibt sich in so einem Fall aus dem Zeitversatz zwischen den einzelnen Bildern in analoger Weise.

Unter dem Begriff "Erntegutstrom" der Erntemaschine 1 ist vorliegend der Strom des verarbeiteten Ernteguts auf dem Ernteguttransportweg der Erntemaschine zu verstehen, welcher speziell bei dem Mähdrescher 1 bei dem Schneidwerk 7 beginnt und jedenfalls bis zum Korntank 8 des Mähdreschers 1 führt. Die Kamera 3 ist hier und vorzugsweise an der Stelle angeordnet, an der das Erntegut E in den Korntank 8 gelangt.

Mit dem Begriff "Bruchkornanteil" ist der Anteil der zerbrochenen Körner an allen Körnern im Erntegutstrom und mit dem Begriff "Nichtkornanteil" ist der Anteil von Material im Erntegutstrom, welches kein Korn im Sinne des Ernteguts ist, gemeint. Dieser Bruchkorn- oder Nichtkornanteil kann sich auf die gerade von der entsprechenden Bildserie erfasste Bildfläche oder auf ein bestimmtes, soeben erfasstes Teilvolumen des Erntegutstroms beziehen. Bevorzugt ist aber, dass der Bruchkornanteil und/oder der Nichtkornanteil auf einen Durchsatz des Erntegutstroms bezogen ist, also auf die Gesamtheit des Erntegutstroms, wie er durch die Erntemaschine 1 und speziell den Mähdrescher 1 geführt ist.

Der ermittelte Bruchkornanteil und/oder Nichtkornanteil bzw. die zugrundeliegende Analyse kann auf einem einzelnen Bild der Bildserie, auf der ganzen Bildserie oder auf einer speziellen Auswahl von einem oder mehreren Bildern der Bildserie basieren. Dabei können ein oder mehrere Bilder aus der Bildserie ausgewählt werden, welche gemäß einem Qualitätskriterium die beste Aufnahme darstellen. Ein solches Qualitätskriterium kann eine besonders geeignete Helligkeits-, Kontur- oder Kontrastverteilung sein. Die Auswerteeinrichtung 4 nimmt prinzipiell eine Bildanalyse mehrerer oder aller Bilder der Bildserie oder eines Teiles der Bildserie, insbesondere nur eines einzelnen Bildes, vor, bei welcher vorzugsweise zunächst Bruchkörner und Nichtkörner in dem jeweiligen Bild anhand geeigneter Algorithmen erkannt werden. Insbesondere wird dann die von den Bruchkörnern und Nichtkörnern eingenommene Fläche auf dem zweidimensionalen Bild als Flächenverhältnis berechnet und dieses Flächenverhältnis mithilfe einer geeigneten Extrapolationsfunktion auf einen Volumenanteil hochgerechnet.

Die vorschlagsgemäße Erntemaschine 1 ist nun dadurch gekennzeichnet, dass der bzw. die Kameraparameter in der Weise änderbar ist bzw. sind, dass die Visualisierungseinrichtung 5 das von der Kamera 3 jeweils aufgenommene reale Bild 10 des Erntegutstroms, das Teil der aufgenommenen Bildserie ist, den bzw. die von der Auswerteeinrichtung 4 real ermittelten Erntegutparameter "Bruchkornanteil" BKA und/oder "Nichtkornanteil" (Reinheitsgrad) NKA und schließlich ein Kameraparameter-Änderungsmodul 9 der Kameraeinstelleinrichtung 6 zugleich anzeigt. Dies erfolgt derart, dass eine Änderung des Kameraparameters bzw. der Kameraparameter an einen Echtzeit-Vergleich des jeweiligen von der Auswerteeinrichtung 4 ermittelten Erntegutparameters "Bruchkornanteil" und/oder "Nichtkornanteil" einerseits mit den im realen Bild 10 erkennbaren realen Bedingungen andererseits koppelbar ist.

Zu diesem Zweck weist die Visualisierungseinrichtung 5 einen Monitor 5a auf, auf dem gleichzeitig das reale Bild 10 des Erntegutstroms, die real ermittelten Erntegutparameter "Bruchkornanteil" BKA und/oder "Nichtkornanteil" NKA und das Kameraparameter-Änderungsmodul 9 angezeigt werden können.

Hier und nachfolgend ist mit dem Begriff des real ermittelten Erntegutparameters "Bruchkornanteil" BKA bzw. des real ermittelten Erntegutparameters "Nichtkornanteil" NKA der gerade angezeigte spezielle Wert für den Bruchkornanteil bzw. Nichtkornanteil gemeint, der von der Auswerteeinrichtung 4 basierend auf dem auf der Visualisierungseinrichtung 5 angezeigten realen Bild 10 des Erntegutstroms und/oder basierend auf einer Bildserie, die das reale Bild 10 umfasst, ermittelt worden ist. In dem Fall, dass die Auswerteeinrichtung 4 den jeweiligen Erntegutparameter "Bruchkornanteil" BKA und/oder "Nichtkornanteil" NKA basierend auf einer Bildserie, also nicht nur basierend auf einem Einzelbild, ermittelt, ist die Bildserienaufnahmedauer der für die Ermittlung herangezogenen Bildserie insbesondere von der Auswerteeinrichtung 4 vorgebbar. Die Bildserienaufnahmedauer der Bildserie umfassend die Mehrzahl an Bildern, die für die Ermittlung herangezogen werden, beträgt dabei beispielsweise weniger als 60 Sekunden, bevorzugt weniger als 10 Sekunden, besonders bevorzugt weniger als 1 Sekunde. Damit ist gewährleistet, dass die systemseitig ermittelten Werte für den Bruchkornanteil und/oder für den Nichtkornanteil im Wesentlichen den aktuell als reales Bild 10 angezeigten Ausschnitt des Erntegutstroms betreffen, wodurch der Bediener besonders genau abschätzen kann, ob die systemseitig ermittelten Erntegutparameter "Bruchkornanteil" BKA und/oder "Nichtkornanteil" NKA den realen Bedingungen, die der Bediener dem realen Bild 10 entnehmen kann, entsprechen.

Bei dem Monitor 5a der Visualisierungseinrichtung 5 handelt es sich hier und vorzugsweise um einen Touchscreen-Monitor, wobei dieser hier mehrere Anzeigebereiche A₁, A₂, A₃ aufweist. Die Anzeigebereiche A₁, A₂, A₃ sind hier voneinander getrennt dargestellt, können aber auch zumindest abschnittsweise überlappen, solange gewährleistet ist, dass gleichzeitig auf ein und demselben Monitor 5a das reale Bild 10, die ermittelten Erntegutparameter "Bruchkornanteil" BKA und/oder "Nichtkornanteil" NKA sowie das Kameraparameter-Änderungsmodul 9 angezeigt werden können.

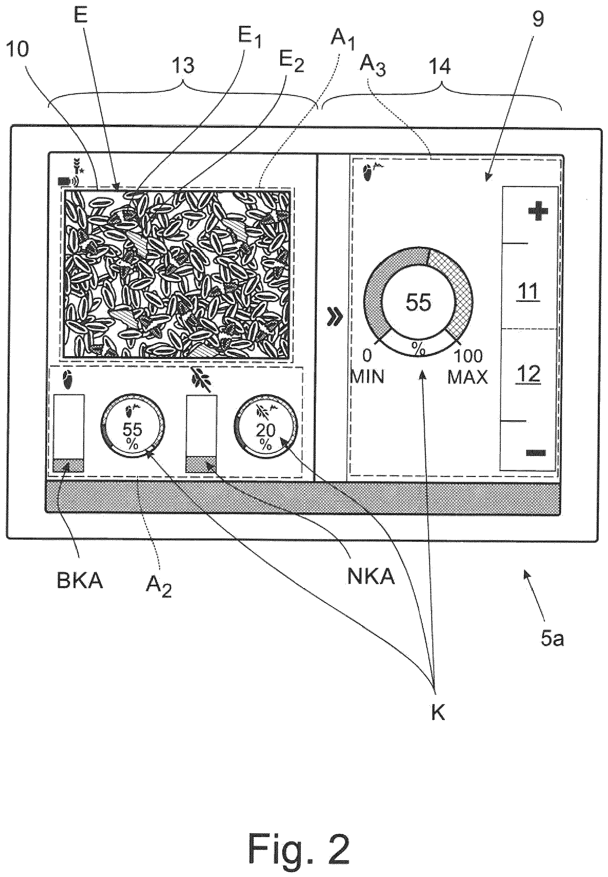

In einem ersten Anzeigebereich A₁ wird bei dem in Fig. 2 dargestellten Ausführungsbeispiel das von der Kamera 3 aufgenommene reale Bild 10 des Erntegutstroms als Teil einer aufgenommenen Bildserie angezeigt. Die Anzeige des realen Bildes 10 kann dabei in Farbe, in Graustufen oder in schwarz-weiß erfolgen, wobei Bruchkörner E₁ und/oder Nichtkornbestandteile E₂ in der Darstellung gegenüber dem übrigen Erntegut E auch hervorgehoben sein können, beispielsweise durch eine farbige Hervorhebung, eine Konturierung o.dgl.

In einem zweiten Anzeigebereich A₂ werden hier die real ermittelten Erntegutparameter "Bruchkornanteil" BKA (linker Teil des Anzeigebereichs) und "Nichtkornanteil" NKA (rechter Teil des Anzeigebereichs) angezeigt. Die Anzeige erfolgt hier und vorzugsweise prozentual, wobei der Erntegutparameter "Bruchkornanteil" BKA hier beispielhaft 15 % und der Erntegutparameter "Nichtkornanteil" NKA hier beispielhaft 20 % beträgt. Die Darstellung erfolgt bei diesem Ausführungsbeispiel in Form einer Balkenanzeige, kann aber auch in Form einer Kreissegmentanzeige erfolgen. Die hier zusätzlich dargestellte linke und rechte Kreissegmentanzeige zeigt den aktuell für den jeweiligen Erntegutparameter "Bruchkornanteil" BKA und den Erntegutparameter "Nichtkornanteil" NKA individuell eingestellten Kameraparameter dar, der in einem dritten Anzeigebereich A₃ eingestellt wird.

In dem dritten Anzeigebereich A₃ wird hier das Kameraparameter-Änderungsmodul 9 angezeigt. Der dritte Anzeigebereich A₃ bzw. das Kameraparameter-Änderungsmodul 9 ist hier und vorzugsweise konfiguriert zur Vornahme und/oder Anzeige von Einstellungen und/oder Änderungen des jeweiligen Kameraparameters, der bedienerseitig über die Kameraeinstelleinrichtung 6 eingegeben und/oder verändert werden kann. Zur Änderung des jeweiligen Kameraparameters weist der dritte Anzeigebereich A₃ bzw. das Kameraparameter-Änderungsmodul 9 mindestens ein virtuelles Bedienelement 11, 12 auf, hier und vorzugsweise eine virtuelle Bedientaste 11 mit einem "Plus"-Symbol sowie eine virtuelle Bedientaste 12 mit einem "Minus"-Symbol. Durch bedienerseitiges Betätigen der virtuellen Bedienelemente 11, 12 kann der jeweils zu ändernde Kameraparameter solange verstellt werden, dass die ermittelten und angezeigten Erntegutparameter "Bruchkornanteil" BKA und "Nichtkornanteil" NKA mit der Darstellung im realen Bild 10 übereinstimmen. Grundsätzlich ist es auch denkbar, eine Verstellung eines Kameraparameters über einen auf dem Monitor 5a dargestellten virtuellen Schieberegler oder Kreisregler (gebogener Schieberegler) zu ermöglichen. Die Einstellung erfolgt hier für den Erntegutparameter "Bruchkornanteil" BKA und den Erntegutparameter "Nichtkornanteil" NKA jeweils unabhängig voneinander. Die jeweils vorgenommene Einstellung wird dann im zweiten Anzeigebereich A₂ für jeden der Erntegutparameter "Bruchkornanteil" BKA und "Nichtkornanteil" angezeigt.

Hier und vorzugsweise wird genau ein Kameraparameter im dritten Anzeigeabschnitt A₃ angezeigt, der über die virtuellen Bedienelemente 11, 12 änderbar ist. Bei dem Kameraparameter handelt es sich hier insbesondere um die Kameraempfindlichkeit K. Diese ist hier gerade für den Erntegutparameter "Bruchkornanteil" BKA eingestellt worden Die Kameraempfindlichkeit K ist hier und vorzugsweise prozentual angegeben, beispielsweise beträgt diese hier 55 % für den Erntegutparameter "Bruchkornanteil" BKA. Vorher ist bereits eine Kameraempfindlichkeit K von 20 % für den Erntegutparameter "Nichtkornanteil" NKA eingestellt worden, was im zweiten Anzeigebereich A₂ angezeigt wird. Die Anzeige des Kameraparameters, hier der Kameraempfindlichkeit K, erfolgt hier insbesondere über eine Kreissegmentanzeige. Grundsätzlich ist für diese Anzeige aber auch eine Balkenanzeige denkbar.

Der Kameraparameter "Kameraempfindlichkeit" K umfasst hier insbesondere die Auflösung, den Kontrast und/oder die Helligkeit. Mit einer Änderung der Kameraempfindlichkeit K wird dann gleichzeitig die Auflösung, der Kontrast und/oder die Helligkeit geändert. Grundsätzlich ist es aber auch denkbar, die Auflösung, den Kontrast und/oder die Helligkeit jeweils separat zu ändern. Im letzteren Fall handelt es sich bei der Auflösung, bei dem Kontrast und/oder bei der Helligkeit um separate Kameraparameter.

Bei dem in Fig. 2 dargestellten Ausführungsbeispiel sind der erste Anzeigebereich A₁ und der zweite Anzeigebereich A₂ auf einem gemeinsamen Monitorabschnitt 13 angeordnet, wohingegen der dritte Anzeigeabschnitt A₃ in einem davon horizontal getrennten Monitorabschnitt 14 angeordnet ist. Dabei sind der erste Anzeigebereich A₁ und der zweite Anzeigebereich A₂ vertikal voneinander getrennt. Eine solche Anordnung ist besonders übersichtlich. Grundsätzlich sind aber auch andere Anordnungen denkbar, beispielsweise eine Anordnung, bei der die Monitorabschnitte 13, 14 vertikal voneinander getrennt sind und/oder der erste Anzeigebereich A₁ und der zweite Anzeigebereich A₂ horizontal voneinander getrennt sind.

### Bezugszeichenliste

- 1: Landwirtschaftliche Erntemaschine bzw. Mähdrescher
- 2: Kontrollanordnung
- 3: Kamera
- 4: Auswerteeinrichtung
- 5: Visualisierungseinrichtung
- 5a: Monitor
- 6: Kameraeinstelleinrichtung
- 7: Schneidwerk
- 8: Korntank
- 9: Kameraparameter-Änderungsmodul
- 10: Angezeigtes reales Bild
- 11, 12: Virtuelle Bedienelemente
- 13, 14: Monitorabschnitte
- A₁-A₃: Anzeigebereiche
- E: Erntegut
- E₁: Bruchkörner
- E₂: Nichtkornbestandteile
- BKA: Erntegutparameter "Bruchkornanteil"
- NKA: Erntegutparameter "Nichtkornanteil"
- K: Kameraparameter "Kameraempfindlichkeit"

## Patentansprüche

1. Landwirtschaftliche Erntemaschine, insbesondere Mähdrescher (1), mit einer Kontrollanordnung (2), die eine Kamera (3), die eine Bildserie eines durchlaufenden Erntegutstroms aufnimmt, eine Auswerteeinrichtung (4), die den Erntegutparameter "Bruchkornanteil" (BKA) des Erntegutstroms und/oder den Erntegutparameter "Nichtkornanteil" (NKA) des Erntegutstroms basierend auf einer Bildanalyse der aufgenommenen Bildserie ermittelt, eine Visualisierungseinrichtung (5), die den/die ermittelten Erntegutparameter(s) "Bruchkornanteil" (BKA) und/oder "Nichtkornanteil" (NKA) anzeigt und eine Kameraeinstelleinrichtung (6) umfasst, die eine bedienerseitige Änderung mindestens eines Kameraparameters der Kamera (3) ermöglicht,
**dadurch gekennzeichnet,**
**dass** der/die Kameraparameter in der Weise änderbar ist/sind, dass die Visualisierungseinrichtung (5) das reale Bild (10) des Erntegutstroms, den/die real ermittelten Erntegutparameter "Bruchkornanteil" (BKA) und/oder "Nichtkornanteil" (NKA) und ein Kameraparameter-Änderungsmodul (9) der Kameraeinstelleinrichtung (6) in der Weise zugleich anzeigt, dass eine Änderung des/der Kameraparameter(s) an einen Echtzeit-Vergleich des/der von der Auswerteeinrichtung (4) ermittelten Erntegutparameter(s) "Bruchkornanteil" (BKA) und/oder "Nichtkornanteil" (NKA) mit den im realen Bild (10) dargestellten realen Bedingungen koppelbar ist.

2. Landwirtschaftliche Erntemaschine nach Anspruch 1, **dadurch gekennzeichnet, dass** die Visualisierungseinrichtung (5) einen Monitor (5a) umfasst, auf dem das reale Bild (10) des Erntegutstroms, der/die real ermittelte(n) Erntegutparameter "Bruchkornanteil" (BKA) und/oder "Nichtkornanteil" (NKA) und das Kameraparameter-Änderungsmodul (9) zugleich angezeigt werden.

3. Landwirtschaftliche Erntemaschine nach Anspruch 1 oder 2, **dadurch gekennzeichnet, dass** der Monitor (5a) der Visualisierungseinrichtung (5) ein Touchscreen-Monitor ist.

4. Landwirtschaftliche Erntemaschine nach einem der vorhergehenden Ansprüche, **dadurch gekennzeichnet, dass** der Monitor (5a) der Visualisierungseinrichtung (5) mehrere Anzeigebereiche (A₁-A₃) aufweist, von denen ein erster Anzeigebereich (A₁) zur Anzeige des realen Bilds (10) des Erntegutstroms und/oder ein zweiter Anzeigebereich (A₂) zur Anzeige des/der real ermittelten Erntegutparameter(s) "Bruchkornanteil" (BKA) und/oder "Nichtkornanteil" (NKA) und/oder ein dritter Anzeigeabschnitt (A₃) zur Anzeige des Kameraparameter-Änderungsmoduls (9) konfiguriert ist.

5. Landwirtschaftliche Erntemaschine nach einem der vorhergehenden Ansprüche, **dadurch gekennzeichnet, dass** der erste Anzeigeabschnitt (A₁) und der zweite Anzeigeabschnitt (A₂) auf einem gemeinsamen Monitorabschnitt (13) und der dritte Anzeigeabschnitt (A₃) in einem davon horizontal oder vertikal getrennten Monitorabschnitt (14) angezeigt wird.

6. Landwirtschaftliche Erntemaschine nach einem der vorhergehenden Ansprüche, **dadurch gekennzeichnet, dass** im zweiten Anzeigeabschnitt (A₂) der/die ermittelte(n) Erntegutparameter prozentual und/oder als Balken- und/oder als Kreissegmentanzeige angezeigt wird/werden.

7. Landwirtschaftliche Erntemaschine nach einem der vorhergehenden Ansprüche, **dadurch gekennzeichnet, dass** im dritten Anzeigeabschnitt (A₃) der/die änderbare(n) Kameraparameter prozentual und/oder als Balken- und/oder als Kreissegmentanzeige angezeigt wird/werden.

8. Landwirtschaftliche Erntemaschine nach einem der vorhergehenden Ansprüche, **dadurch gekennzeichnet, dass** das Kameraparameter-Änderungsmodul (9) konfiguriert ist zur Vornahme und/oder Anzeige von Einstellungen und/oder Änderungen des/der Kameraparameter(s).

9. Landwirtschaftliche Erntemaschine nach einem der vorhergehenden Ansprüche, **dadurch gekennzeichnet, dass** das Kameraparameter-Änderungsmodul (9) mindestens ein virtuelles Bedienelement (11, 12) zur Änderung des/der Kameraparameter(s) aufweist.

10. Landwirtschaftliche Erntemaschine nach einem der vorhergehenden Ansprüche, **dadurch gekennzeichnet, dass** mindestens ein virtuelles Bedienelement (11, 12) des Kameraparameter-Änderungsmoduls (9) eine virtuelle Bedientaste (11, 12) und/oder mindestens ein virtuelles Bedienelement des Kameraparameter-Änderungsmoduls (9) ein virtueller Schieberegler oder Kreisregler ist.

11. Landwirtschaftliche Erntemaschine nach einem der vorhergehenden Ansprüche, **dadurch gekennzeichnet, dass** der änderbare Kameraparameter die Kameraempfindlichkeit (K) ist, wobei die Kameraempfindlichkeit (K) die Auflösung, den Kontrast und/oder die Helligkeit umfasst.

12. Landwirtschaftliche Erntemaschine nach einem der vorhergehenden Ansprüche, **dadurch gekennzeichnet, dass** die Auflösung, der Kontrast und/oder die Helligkeit jeweils separat änderbare Kameraparameter bilden.

## Claims

1. An agricultural harvesting machine, in particular a combine harvester (1), with a control system (2) which comprises a camera (3) which records a series of images of a passing flow of harvested material, an evaluation unit (4) which determines the "damaged grain fraction" (DGF) harvested material parameter of the flow of harvested material and/or the "non-grain fraction" (NGF) harvested material parameter of the flow of harvested material on the basis of an image analysis of the recorded series of images, a visualisation device (5) which displays the determined harvested material parameter(s) "damaged grain fraction" (DGF) and/or "non-grain fraction" (NGF) and a camera setting device (6) which enables an operator to vary at least one camera parameter of the camera (3),
**characterized in that**
the camera parameter(s) can be varied in a manner such that the visualisation device (5) simultaneously displays the actual image (10) of the flow of harvested material, the actual determined harvested material parameter(s) "damaged grain fraction" (DGF) and/or "non-grain fraction" (NGF) and a camera parameter variation module (9) of the camera setting device (6) in a manner such that a variation in the camera parameter(s) can be coupled with a real time comparison of the harvested material parameter(s) "damaged grain fraction" (DGF) and/or "non-grain fraction" (NGF) determined by the evaluation unit (4) with the actual conditions displayed in the actual image (10).

2. The agricultural harvesting machine according to claim 1, **characterized in that** the visualisation device (5) comprises a monitor (5a) on which the actual image (10) of the flow of harvested material, the actual determined harvested material parameters "damaged grain fraction" (DGF) and/or "non-grain fraction" (NGF) and the camera parameter variation module (9) are displayed simultaneously.

3. The agricultural harvesting machine according to claim 1 or claim 2, **characterized in that** the monitor (5a) of the visualisation device (5) is a touch screen monitor.

4. The agricultural harvesting machine according to one of the preceding claims, **characterized in that** the monitor (5a) of the visualisation device (5) has a plurality of display zones (Ai-A₃), of which a first display zone (A₁) is configured to display the actual image (10) of the flow of harvested material and/or a second display zone (A₂) is configured to display the actual determined harvested material parameter(s) "damaged grain fraction" (DGF) and/or "non-grain fraction" (NGF) and/or a third display section (A₃) is configured to display the camera parameter variation module (9).

5. The agricultural harvesting machine according to one of the preceding claims, **characterized in that** the first display section (A₁) and the second display section (A₂) are displayed on a common monitor section (13) and the third display section (A₃) is displayed in a monitor section (14) which is horizontally or vertically separated therefrom.

6. The agricultural harvesting machine according to one of the preceding claims, **characterized in that** in the second display section (A₂), the determined harvested material parameter(s) is/are displayed as a percentage and/or as a bar display and/or as a circular segment display.

7. The agricultural harvesting machine according to one of the preceding claims, **characterized in that** in the third display section (A₃), the variable camera parameter(s) is/are displayed as a percentage and/or as a bar display and/or as a circular segment display.

8. The agricultural harvesting machine according to one of the preceding claims, **characterized in that** the camera parameter variation module (9) is configured to execute and/or display settings and/or variations in the camera parameter(s).

9. The agricultural harvesting machine according to one of the preceding claims, **characterized in that** the camera parameter variation module (9) has at least one virtual operating element (11, 12) for varying the camera parameter(s).

10. The agricultural harvesting machine according to one of the preceding claims, **characterized in that** at least one virtual operating element (11, 12) of the camera parameter variation module (9) is a virtual operating key (11, 12) and/or at least one virtual operating element of the camera parameter variation module (9) is a virtual slide control or dial.

11. The agricultural harvesting machine according to one of the preceding claims, **characterized in that** the variable camera parameter is the camera sensitivity (K), wherein the camera sensitivity (K) is the resolution, the contrast and/or the brightness.

12. The agricultural harvesting machine according to one of the preceding claims, **characterized in that** the resolution, the contrast and/or the brightness respectively form separately variable camera parameters.

## Revendications

1. Machine agricole de récolte, en particulier moissonneuse-batteuse (1), comprenant un agencement de contrôle (2) qui inclut une caméra (3), laquelle prend une série d'images du flux de récolte passant, un équipement d'analyse (4), lequel détermine le paramètre de produit récolté « proportion de grains cassés » (BKA) du flux de produit récolté et/ou le paramètre de produit récolté « proportion de non-grains » (NKA) du flux de produit récolté sur la base d'une analyse d'images de la série d'images prise, un équipement de visualisation (5), lequel indique le/les paramètre(s) détecté(s) de produit récolté « proportion de grains cassés » (BKA) et/ou « proportion de non-grains » (NKA), et un équipement de réglage de caméra (6) qui permet une modification, côté utilisateur, au moins d'un paramètre de caméra de la caméra (3),
**caractérisée en ce que**
le/les paramètre(s) de caméra est/sont modifiable(s) de façon que l'équipement de visualisation (5) affiche simultanément l'image réelle (10) du flux de produit récolté, le/les paramètre(s) de produit récolté réellement déterminés « proportion de grains cassés » (BKA) et/ou « proportion de non-grains » (NKA) et un module de modification de paramètres de caméra (9) de l'équipement de réglage de caméra (6), de façon qu'une modification du/des paramètre(s) de caméra soit couplable à une comparaison en temps réel du/des paramètre(s) de produit récolté, déterminés par l'équipement d'analyse (4), « proportion de grains cassés » (BKA) et/ou « proportion de non-grains » (NKA) avec les conditions réelles représentées sur l'image réelle.

2. Machine agricole de récolte selon la revendication 1, **caractérisée en ce que** l'équipement de visualisation (5) inclut un écran de contrôle (5a) sur lequel l'image réelle (10) du flux de produit récolté, le/les paramètre(s) de produit récolté réellement déterminé(s) « proportion de grains cassés » (BKA) et/ou « proportion de non-grains » (NKA) et le module de modification de paramètres de caméra (9) sont affichés simultanément.

3. Machine agricole de récolte selon la revendication 1 ou 2, **caractérisée en ce que** l'écran de contrôle (5a) de l'équipement de visualisation (5) est un écran de contrôle tactile.

4. Machine agricole de récolte selon une des revendications précédentes, **caractérisée en ce que** l'écran de contrôle (5a) de l'équipement de visualisation (5) comporte plusieurs zones d'affichage (A₁-A₃), dont une première zone d'affichage (A₁) est configurée pour afficher l'image réelle (10) du flux de produit récolté et/ou une seconde zone d'affichage (A₂) est configurée pour afficher le/les paramètre(s) de produit récolté réellement déterminé(s) « proportion de grains cassés » (BKA) et/ou « proportion de non-grains » (NKA) et/ou une troisième portion d'affichage (A₃) est configurée pour afficher le module de modification de paramètres de caméra (9).

5. Machine agricole de récolte selon une des revendications précédentes, **caractérisée en ce que** la première portion d'affichage (A₁) et la deuxième portion d'affichage (A₂) sont affichées sur une portion d'écran de contrôle commune (13), et la troisième portion d'affichage (A₃) est affichée dans une portion d'écran de contrôle (14) séparée horizontalement ou verticalement de celle-ci.

6. Machine agricole de récolte selon une des revendications précédentes, **caractérisée en ce que**, dans la deuxième portion d'affichage (A₂), le/les paramètre(s) de produit récolté déterminé(s) est/sont affiché(s) sous forme de pourcentage(s) et/ou sous forme d'histogramme(s) et/ou de camembert(s).

7. Machine agricole de récolte selon une des revendications précédentes, **caractérisée en ce que**, dans la troisième portion d'affichage (A₃), le/les paramètre(s) de caméra modifiable(s) est/sont affiché(s) sous forme de pourcentage(s) et/ou sous forme d'histogramme(s) et/ou de camembert(s).

8. Machine agricole de récolte selon une des revendications précédentes, **caractérisée en ce que** le module de modification de paramètres de caméra (9) est configuré pour effectuer et/ou afficher des réglages et/ou des modifications du/des paramètre(s) de caméra.

9. Machine agricole de récolte selon une des revendications précédentes, **caractérisée en ce que** le module de modification de paramètres de caméra (9) comprend au moins un élément d'utilisation virtuel (11, 12) pour modifier le/les paramètre(s) de caméra.

10. Machine agricole de récolte selon une des revendications précédentes, **caractérisée en ce qu'**au moins un élément d'utilisation virtuel (11, 12) du module de modification de paramètres de caméra (9) est une touche d'utilisation virtuelle (11, 12) et/ou au moins un élément d'utilisation virtuel du module de modification de paramètres de caméra (9) est un curseur ou un bouton tournant virtuel.

11. Machine agricole de récolte selon une des revendications précédentes, **caractérisée en ce que** le paramètre de caméra modifiable est la sensibilité de caméra (K), la sensibilité de caméra (K) incluant la résolution, le contraste et/ou la luminosité.

12. Machine agricole de récolte selon une des revendications précédentes, **caractérisée en ce que** la résolution, le contraste et/ou la luminosité forment respectivement des paramètres de caméra modifiables séparément.
